**Europäisches Patentamt**

**European Patent Office**

**Office européen des brevets**

(19)

(11) Veröffentlichungsnummer: **0 012 211**
**A1**

(12) **EUROPÄISCHE PATENTANMELDUNG**

(21) Anmeldenummer: **79104273.2**

(22) Anmeldetag: **02.11.79**

(51) Int. Cl.³: **B 23 D 77/04**

---

(30) Priorität: **18.12.78 DE 2854630**

(43) Veröffentlichungstag der Anmeldung: **25.06.80**
**Patentblatt 80/13**

(84) Benannte Vertragsstaaten: **AT BE CH FR GB IT LU NL SE**

(71) Anmelder: **Koyemann Werkzeuge GmbH, Am Wimmersberg 8, D-4006 Erkrath 1 (DE)**

(72) Erfinder: **Westphalen, Volker, Ing. grad, Hespersstrasse 5, D-5040 Mönchengladbach (DE)**
Erfinder: **Döge, Ulrich, Am Hackenbruch 78, D-4000 Düsseldorf (DE)**

(74) Vertreter: **Freischem, Werner, Dipl.-Ing. et al, Patentanwälte Dipl.-Ing. w. Freischem Dipl.-Ing. I. Freischem An Gross St. Martin 2, D-5000 Köln 1 (DE)**

---

(54) **Maschinenreibahle.**

(57) Bei einer Maschinenreibahle, bestehend aus einem Werkzeughalter und einem in eine radiale Ausnehmung des Werkzeughalters einsetzbaren und darin radial pendelnd gehaltenen Reibmesserpaar (3, 4), setzen sich die Reibmesser (3, 4) aus einem Schneidkörper (10) und einem Schneidkörperhalter (30) zusammen. Zum Einstellen des Abstandes der parallel zur Drehachse des Werkzeughalters verlaufenden Schneidkanten (5), sind die Reibmesser (3, 4) zum Beispiel mittels einer Verstellspindel in einer radialen Ebene zueinander verschiebbar. Die Reibmesser (3, 4) sind mit kerbenartigen Ausnehmungen (8) versehen, in die zum Einstellen des Pendelspiels ein Zentrierstift eingreift. Damit die Schneidkörper (10) unter Einhaltung der für Reibahlen notwendigen hohen Maßgenauigkeit leicht ausgewechselt werden können, weist der Schneidkörperhalter (30) der Reibmesser (3, 4) im Bereich der aus dem Werkzeughalter herausragenden Enden eine L-förmige Ausnehmung (13) mit einer genau rechtwinklig zur Drehachse des Werkzeughalters verlaufenden Anschlagfläche (15) auf. In die Ausnehmung (13) ist ein L-förmiger, einen Klemmschenkel (12) und einen dazu rechtwinkligen Schneidschenkel (11) aufweisender Schneidkörper (10) auswechselbar eingesetzt und durch eine im Schneidkörperhalter (30) angebrachte Konusschraube (21), die mit ihrem Konus (22) auf eine kegelförmige Ausnehmung (20) im Klemmschenkel (12) des Schneidkörpers (10) einwirkt, festklemmbar angeordnet. Beim Festspannen wird der Schneidkörper (10) durch Keilanzug gegen die Anschlagfläche (15), die Anlagefläche (17) und die Abstützfläche (16) der Ausnehmung (13) gedrückt.

0012211

- 1 -

Anmelder:     Koyemann Werkzeuge GmbH
              Am Wimmersberg 8
              4006 Erkrath 1

Bezeichnung:  Maschinenreibahle


Die Erfindung bezieht sich auf eine Maschinenreibahle, bestehend aus einem Werkzeughalter und einem in eine radiale Ausnehmung des Werkzeughalters einsetzbaren und darin radial pendelnd gehaltenen Reibmesserpaar, dessen aus je einem Schneidkörper und einem Schneidkörperhalter sich zusammensetzende Reibmesser zum Einstellen des Abstandes der parallel zur Drehachse des Werkzeughalters verlaufenden Schneidkanten, zum Beispiel mittels einer Verstellspindel, in einer radialen Ebene zueinander verschiebbar sind und mit kerbenartigen Ausnehmungen versehen sind, in die zum Einstellen des Pendelspiels ein Zentrierstift eingreift.

Bei den bekannten Maschinenreibahlen dieser Art sind die Schneidkanten an Schneidkörpern angeschliffen, die mit dem Schneidkörperhalter fest verbunden, insbesondere verlötet sind. Durch die feste Verbindung der Schneidkörper am Schneidkörperhalter ergeben sich zahlreiche Nachteile. Wegen der bei Reibahlen erforderlichen hohen Maßgenauigkeit und Präzision sind nur Spezialfirmen in der Lage, die Reibmesser nachzuschleifen, so daß wegen der notwendigen Wartezeiten eine aufwendige Lagerhaltung der aus Schneidkörpern und Schneidkörperhaltern sich zu-

- 2 -

0012211

sammensetzenden Reibmessern erforderlich ist. Durch den Transport der Reibmesser zu den das Nachschleifen besorgenden Fachfirmen entstehen hohe Transportkosten. Ein Umrüsten der bekannten Reibmesser mit anderen Schneidkörpern ist im allgemeinen nicht möglich. Weil die Schneidkanten der bekannten Schneidmesser nicht völlig gleichmäßig nachgeschliffen werden können, ist es notwendig, bei den bekannten Reibahlen das axiale Pendelspiel jedes Reibmessers gesondert einzustellen. Die Schneidkörperhalter haben deshalb jeweils an der Ecke zwischen Außenseite und Oberseite eine Kerbe, in die ein Zentrierstift mehr oder weniger tief eingreift zur Festlegung des axialen Pendelspiels. Da für jedes Reibmesser des Reibmesserpaares diese Einstellung erforderlich ist, ist diese Einstellarbeit zeitaufwendig und es kann dabei auch leicht zu fehlerhaften Einstellungen führen. Ferner ist es bei den bekannten Maschinenreibahlen schwierig, die Reibmesser mit in axialer Richtung vorstehenden Schneiden, zum Beispiel zum Reiben von Sacklöchern, in die Ausnehmungen des Werkzeughalters einzusetzen. Diese Schwierigkeiten könnten vermieden werden, wenn die Schneidkörper auswechselbar am Schneidkörperhalter befestigt werden könnten.

Von der Anmelderin wurde bereits in der DE-PS 24 37 288 ein Schneidwerkzeug für die spanabhebende Bearbeitung vorgeschlagen, mit einem Werkzeugschaft und einem an Anschlagflächen einer Ausnehmung des Schaftes andrückbaren L-förmigen und an einem Schenkel eine Schneidkante aufweisenden Schneidkörper, der mittels einer, den schneidkantenfreien Schenkel beaufschlagenden Konusschraube durch Keilanzug gehalten ist, das dadurch gekennzeichnet ist, daß der Werkzeugschaft eine, eine Auflagefläche bildende L-förmige Ausnehmung aufweist und die Konusschraube parallel zur Schneidkante angeordnet und ihr Keilanzug gegen die Auflagefläche und zwei recht-

0012211

winklig aufeinanderstehende Anschlagflächen der Ausnehmung gerichtet ist. Wegen der bei Reibahlen erforderlichen hohen Maßgenauigkeit war es bisher nicht möglich, die Schneidkörperhalter einer Reibahle der eingangs genannten Art mit auswechselbaren Schneidkörpern zu versehen.

Der Erfindung liegt die Aufgabe zugrunde, eine gattungsgemäße Maschinenreibahle so auszubilden, daß unter Einhaltung der für Reibahlen hohen Maßgenauigkeit die Schneidkörper leicht auswechselbar mit dem Schneidkörperhalter verbindbar sind.

Diese Aufgabe wird erfindungsgemäß dadurch gelöst, daß der Schneidkörperhalter der Reibmesser im Bereich der aus dem Werkzeughalter herausragenden Enden eine L-förmige Ausnehmung mit einer genau rechtwinklig zur Drehachse des Werkzeughalters verlaufenden Anschlagfläche aufweist und in diese Ausnehmung ein L-förmiger, einen Klemmschenkel und einen dazu rechtwinkligen Schneidschenkel aufweisenden Schneidkörper auswechselbar eingesetzt ist, dessen Schneidschenkel an der Außenseite die Schneidkante und an der Innenseite einen auf einer Abstützfläche der Ausnehmung aufliegenden, vorspringenden Abstützbereich aufweist, der sich über weniger als ein Drittel der Länge der Abstützfläche erstreckt und dessen Klemmschenkel auf der Außenseite eine rechtwinklig zur Schneidkante verlaufende Anschlagfläche und auf der Innenseite eine kegelförmige Ausnehmung aufweist, deren Kegelachse parallel zur Schneidkante verläuft und deren einander gegenüberliegende Mantellinien einen Winkel von größer als 110° einschließen, und daß der Schneidkörperhalter eine rechtwinklig zur Anschlagfläche der Ausnehmung verlaufende Gewindbohrung aufweist, in die eine Konusschraube verstellbar ist, deren Konuswinkel dem Winkel der kegelförmigen Ausnehmung entspricht und die durch Keilanzug den Schneidkörper gegen die Anschlagfläche, die Anlagefläche und die Abstützfläche der Ausnehmung drückt.

Weil die Anschlagfläche der L-förmigen Ausnehmung im Schneidkörperhalter genau rechtwinklig zur Drehachse des Werkzeughalters verläuft und die Anschlagfläche des Schneidkörpers ebenfalls genau senkrecht zur Schneidkante verläuft, ist gewährleistet, daß die Schneidkante stets parallel zur Drehachse steht. Ein schnelles und sicheres Einspannen des Schneidkörpers ist aber nur möglich, wenn die einander gegenüberliegenden Mantellinien der kegelförmigen Ausnehmung und der Konusschraube einen Winkel von größer als 110° einschließen und der Schneidschenkel des Schneidkörpers nur über einen relativ kurzen Bereich auf der Abstützfläche der L-förmigen Ausnehmung abgestätzt ist. Die erfindungsgemäße Ausbildung des Schneidkörpers und des Schneidkörperhalters bewirkt, daß die serienmäßig vorgefertigten Schneidkörper,ohne ein Verkanten befürchten zu müssen, schnell und zuverlässig im Schneidkörperhalter befestigt werden können.

Ferner ergibt sich der Vorteil, daß bei Reibahlen mit in axialer Richtung vorstehendem Schneidschenkel das Einsetzen des Reibmesserpaares auch erheblich schneller geht als bei den bekannten Reibahlen, weil einer der beiden Schneidkörper erst nach Einsetzen der Reibmesser an einem der Schneidkörperhalter befestigt werden kann.

Da bei den erfindungsgemäßen Reibahlen ein Nachschleifen nicht erforderlich ist, wird in weiterer Ausbildung der Erfindung vorgeschlagen, daß die kerbenartigen Ausnehmungen an den aneinanderliegenden Innenseiten der Schneidkörperhalter angeordnet sind und der Abstand der kerbenartigen Ausnehmungen von den Abstützflächen der L-förmigen Ausnehmung eines Reibmesserpaares stets gleich ist. Diese Reibahle hat den Vorteil, daß wegen der völligen Maßübereinstimmung der einsetzbaren Schneidkörper und nach Festlegung und Feineinstellung des Abstandes der der Schneidkanten voreinander das radiale Pendelspiel der beiden Reibmesser durch einen axial einstellbaren Konus, beispielsweise eines Stiftes oder einer Einstellschraube, festgelegt werden kann. Durch diese Vereinfachung läßt sich eine Maschinenreibahle mit radial pendelnden Reibmessern erheblich schneller ausrüsten als bei den bekannten Reibahlen.

Vorteilhafterweise sind die Flanken einer Kerbe gleich ausgebildet und schließen normal zu ihrer gemeinsamen Grundlinie einen Winkel von 120 bis 140, vorzugsweise 128° ein. Die Grundlinie der Flanken verläuft in einem Winkel von 35 bis 38° zur Innenseite des Schneidkörperhalters. Es hat sich gezeigt, daß bei einer derartigen Ausbildung der Kerben in Verbindung mit einem Zentrierstift, dessen Konuswinkel etwa 90° beträgt, ein genaues zentrales Einstellen des Pendelspiels möglich ist, trotz der Verschiebbarkeit der Reibmesser gegeneinander zum genauen Festlegen des Durchmessers.

Bei den bekannten Maschinenreibahlen ist der Werkzeughalter einstückig mit einem Einspannschaft verbunden, der beispielsweise radial pendelnden Reibmessern als Zylinderschaft oder als Morsekegelschaft ausgebildet sein kann und der in das Bohrfutter bzw. in den Innenkegel der Bohrspindel von Bohrmaschinen eingespannt werden kann. Da die Innenkegel verschiedener Bohrmaschinen verschieden ausgebildet sind, ist es notwendig, Werkzeughalter mit unterschiedlich ausgebildeten Schäften herzustellen und auf Lager zu halten.

Zur Vermeidung hoher Herstellungskosten und aufwendiger Lagerhaltung wird in weiterer Ausbildung der Erfindung vorgeschlagen, den Werkzeughalter und den Schaft zweiteilig auszubilden und beide Teile über eine selbsthemmende Konusverbindung miteinander zu verbinden. Zweckmäßigerweise ist am Werkzeughalter ein Innenkonus angeordnet, in den der Außenkonus des Schaftes einsteckbar ist. Auf diese Weise können die Werkzeughalter unter Verwendung eines entsprechenden aufsteckbaren Schaftes für die verschiedensten Bohrmaschinen ausgerüstet werden.

Obgleich selbsthemmende Konusverbindungen seit langem bekannt sind, war man bisher der Meinung, daß wegen der zu übertragenden Kräfte und der extrem hohen Genauigkeit, mit der Reibahlen arbeiten müssen, ein Einspannschaft einstückig mit dem die pendelnden Reibmesser tragenden Werkzeughalter verbunden sein müßten. Dieses Vorurteil war so stark, daß man über Jahrzehnte nicht erkannte, daß bei Reibahlen mit pendelnd gelagerten Reibmessern geringe Abweichungen von der Koaxialität zulässig sind und Ungenauigkeiten, die durch eine zweite Steckkupplung auftreten, ohne weiteres in Kauf genommen werden können.

Bei diesen Reibahlen sind die aufzunehmenden Kräfte auch derart, daß sie ohne weiteres über einen selbsthemmenden Konus übertragen werden können. Zwar fallen bei Reibahlen mit aufsteckbarem Schaft mehr Bearbeitungskosten an, weil ein Innenkonus und eine Kegelfläche mehr bearbeitet werden müssen. Diese Mehrkosten werden aber wettgemacht durch erhebliche Materialeinsparungen und durch den Vorteil, daß der Werkzeughalter durch Aufstecken unterschiedlicher Schäfte unterschiedlichen Maschinen angepaßt werden kann.

Weitere Merkmale der Erfindung ergeben sich aus den Patentansprüchen.

In der folgenden Beschreibung werden Ausführungsbeispiele der Erfindung unter Bezugnahme auf die Zeichnungen näher erläutert.

Diese zeigen in

Figur 1 eine perspektivische Ansicht einer Maschinenreibahle mit Kegelschaft,

Figur 2 eine Seitenansicht eines Werkzeugträgers (teilweise geschnitten) mit Kegelschaft,

Figur 3 eine perspektivische Darstellung eines Werkzeugträgers mit darin radial pendelnd einsetzbarem Reibmesserpaar,

Figur 4 Schnittansicht des Werkzeughalters,

Figur 5 perspektivische Darstellung eines Reibmesserpaares nach der Erfindung mit in die Schneidkörperhalter einsetzbaren Schneidkörpern,

Figur 6 Teil eines Schneidkörperhalters mit eingesetztem Schneidkörper.

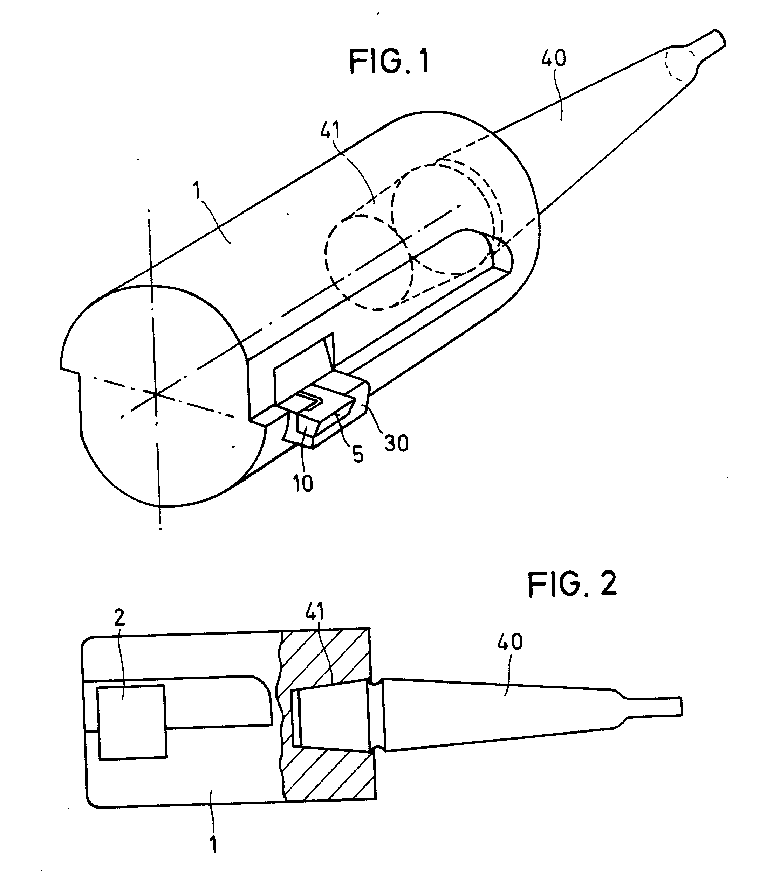

Die Figur 1 zeigt eine Maschinenreibahle, bestehend aus einem Werkzeughalter 1 und einem in eine radiale Ausnehmung 2 des Werkzeughalters 1 eingesetzten Reibmesserpaar 3,4. Jedes Reibmesser 3 bzw. 4 setzt sich zusammen aus einem Schneidkörper 10 und einem Schneidkörperhalter 30. Der Werkzeughalter 1 ist über einen Schaft 40 in den Innenkegel einer Bohrspindel einer Bohrmaschine einspannbar. Der Werkzeughalter 1 ist über einen selbsthemmenden Konus 41 mit dem Einspannschaft 40 verbunden.

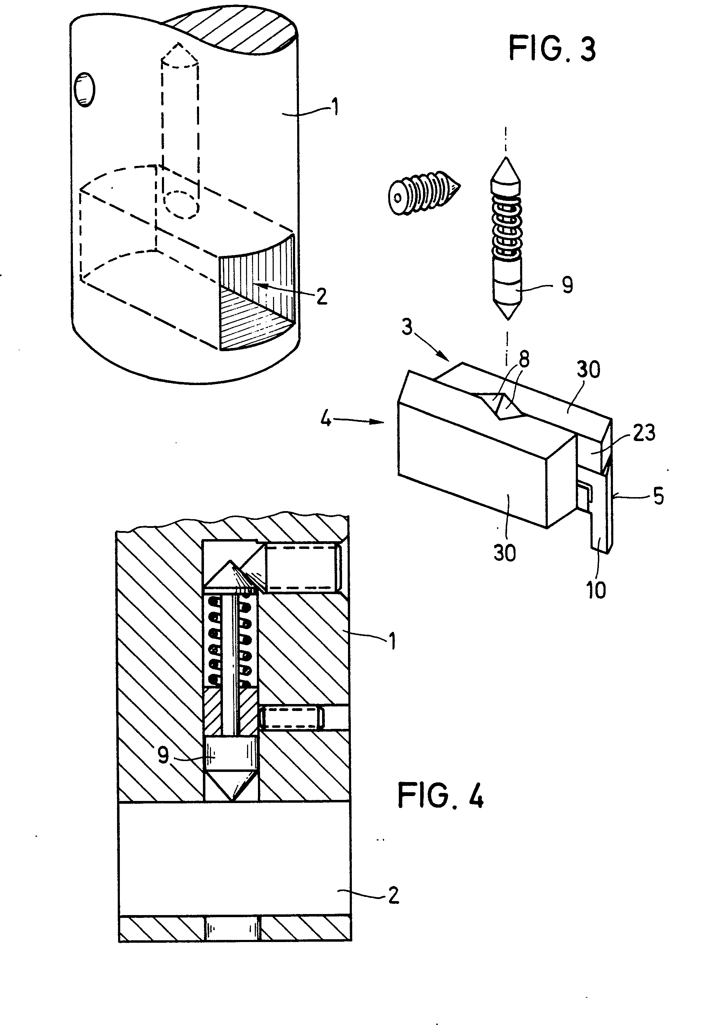

Wie die Fig. 3 und 4 zeigen, ist ein Reibmesserpaar 3,4 in die radiale Ausnehmung 2 des Werkzeughalters 1 einsetzbar. In diesem Werkzeughalter 1 befindet sich ein Zentrierstift 9 mit einer konischen Spitze, die in Kerben 8 eingreifen, welche an der oberen Kante der innenliegenden Flächen 23 der Schneidkörperhalter 30 eingearbeitet sind. Durch axiales Einstellen des Zentrierstiftes 9 kann sehr feinfühlig das radiale Pendelspiel des Reibmesserpaares 3,4 eingestellt werden.

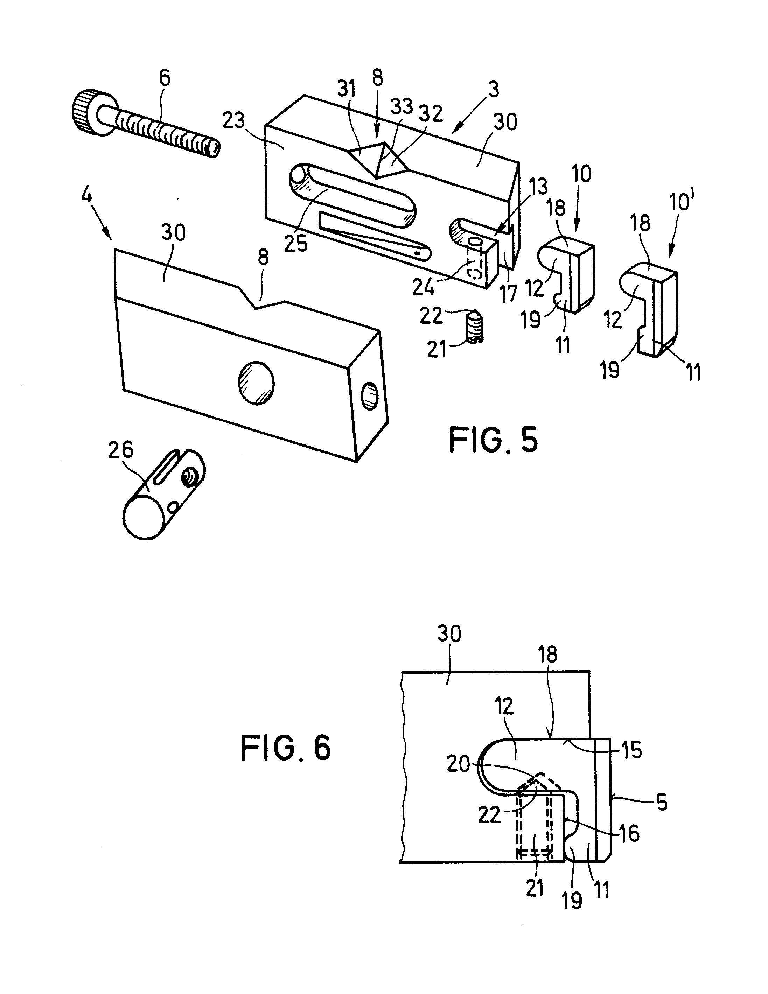

Wie Fig. 5 zeigt, können die Reibmesser 3,4 bzw. die beiden Schneidkörperhalter 30 mit Hilfe einer Verstellspindel 6 feinfühlig zueinander verstellt werden, um den Abstand der Schneidkanten 5 der beiden Reibmesser 3,4 genau auf den zu bearbeitenden Durchmesser einstellen zu können. Im Reibmesser 4 ist eine Mutter 26 einsetzbar, die mit ihrem Gewinde in eine Aussparung 25 des anderen Reibmessers 3 greift. Die Verstellspindel 6 stützt sich auf dem Schneidkörperhalter 30 des anderen Reibmessers 3 ab. Auf diese Weise können die beiden Reibmesser 3,4 entlang ihrer Innenflächen 23 zueinander verschoben werden. Im Bereich der aus dem Werkzeughalter 1 hervorragenden Enden sind in den Schneidkörperhaltern 30 der Reibmesser 3,4 L-förmige Ausnehmungen 13 eingearbeitet, in die L-förmige Schneidkörper 10 einsetzbar sind. Die Schneidkörper 10 bzw. 10' weisen einen Schneidschenkel 11 und einen Klemmschenkel 12 auf. Am Klemmschenkel 12 ist eine genau rechtwinklig zur Schneidkante 5 verlaufende Anschlagfläche 18 angebracht, die an eine Anschlagfläche 15 der L-förmigen Ausnehmung 13 zur Anlage kommt. An der Innenseite des Schneidschenkels 11 befindet sich ein vorspringender Abstützbereich 19, der sich über weniger als ein Drittel der Länge der Abstützfläche 16 erstreckt und der sich im möglichst großen Abstand von den Anschlagflächen 15,18 auf die Abstützfläche 16 der L-förmigen Ausnehmung 13 abstützt.

Auf der Innenseite des Klemmschenkels 12 befindet sich eine kegelförmige Ausnehmung 20, deren Kegelachse parallel zur Schneidkante 5 bzw. zur Drehachse der Reibahle verläuft und deren einander gegenüberliegende Mantellinien einen Winkel von größer als 110°, vorzugsweise einen Winkel von 120° einschließen. Der Schneidkörperhalter 30 weist eine rechtwinklig zur Anschlagfläche 15 der Ausnehmung 13 verlaufende Gewindebohrung 24 auf, in die eine Konusschraube 21 verstellbar ist, deren Konuswinkel dem Winkel der kegelförmigen Ausnehmung 20 entspricht. Mit Hilfe der Konusschraube 21 wird der Klemmschenkel 12 mit seiner Anschlagfläche 18 gegen die Anschlagfläche 15 der L-förmigen Ausnehmung 13 gedrückt. Gleichzeitig aber wird auch der Schneidkörper 10 mit einer seitlichen Fläche gegen die Anlagefläche 17 der L-förmigen Ausnehmung und der Abstützbereich 19 gegen die Abstützfläche 16 gedrückt.

0012211

Die Ausbildung des Schneidkörpers und der Konusschraube bewirken, daß auch bei flüchtigem Einsetzen des Schneidkörpers 10 in die L-förmige Ausnehmung 13 ein Verkanten des Schneidkörpers 10 nicht möglich ist.

Wie Fig. 5 zeigt, kann der Abstützbereich 19 des Schneidschenkels 11 als querverlaufender Wulst ausgebildet sein, der die Schneidkante insbesondere in dem Bereich abstützt, wo sie am höchsten belastet ist.

Wie die Fig. 5 und 3 zeigen, kann die Länge des Schneidschenkels 11 und der Schneidkante 5 axial über den Schneidkörperhalter 30 vorstehen, und zwar bis über den Boden des Werkzeughalters 1 hinaus. Mit einer derartigen Reibahle lassen sich insbesondere Sacklöcher bearbeiten. Weil die Schneidkörper 10 bzw. 10' auch nach Einsetzen der Schneidkörperhalter 30 in die Ausnehmung 2 des Werkzeughalters 1 befestigt werden können, können bei dieser Ausbildung auch die für das Sacklochbohren bestimmten Reibmesser 3,4 leicht im Werkzeughalter 1 ausgewechselt werden.

Wie die Fig. 1 und 2 zeigen, ist der Einspannschaft 40 über eine Konusverbindung 41 mit dem Werkzeughalter 1 verbunden. Der Innenkonus befindet sich im Werkzeughalter 1 und der Außenkonus am Einspannschaft 40. Der Konuswinkel der Konusverbindung 41 liegt im Bereich von 2 bis 5° und entspricht beispielsweise der DIN 238 für Bohrfutterkegel.

PATENTANSPRÜCHE:

1. Maschinenreibahle, bestehend aus einem Werkzeughalter und einem in eine radiale Ausnehmung des Werkzeughalters einsetzbaren und darin radial pendelnd gehaltenen Reibmesserpaar, dessen aus einem Schneidkörper und einem Schneidkörperhalter sich zusammensetzendes Reibmesser zum Einstellen des Abstandes der parallel zur Drehachse des Werkzeughalters verlaufenden Schneidkanten, zum Beispiel mittels einer Verstellspindel in einer radialen Ebene zueinander verschiebbar sind und mit kerbenartigen Ausnehmungen versehen sind, in die zum Einstellen des Pendelspiels ein Zentrierstift eingreift,
dadurch gekennzeichnet,
daß der Schneidkörperhalter (30) der Reibmesser (3,4) im Bereich der aus dem Werkzeughalter (1) herausragenden Enden eine L-förmige Ausnehmung (13) mit einer genau rechtwinklig zur Drehachse des Werkzeughalters (1) verlaufenden Anschlagfläche (15) aufweist und in diese Ausnehmung (13) ein L-förmiger, einen Klemmschenkel (12) und einen dazu rechtwinkligen Schneidschenkel (11) aufweisender Schneidkörper (10) auswechselbar eingesetzt ist, dessen Schneidschenkel (11) an der Außenseite die Schneidkante (5) und an der Innenseite einen auf einer Abstützfläche (16) der Ausnehmung (13) aufliegenden, vorspringenden Abstützbereich (19) aufweist, der sich über weniger als ein Drittel der Länge der Abstützfläche (16) erstreckt und dessen Klemmschenkel (12) auf der Außenseite eine rechtwinklig zur Schneidkante (5) verlaufende Anschlagfläche (18) und auf der Innenseite eine kegelförmige Ausnehmung (20) aufweist, deren Kegelachse parallel zur Schneidkante (5) verläuft und deren einander gegenüberliegende Mantellinien einen Winkel von größer als 110° einschließen, und daß der Schneidkörperhalter (30) eine

- 2 -

0012211

rechtwinklig zur Anschlagfläche (15) der Ausnehmung (13) verlaufende Gewindebohrung (24) aufweist, in die eine Konusschraube (21) verstellbar ist, deren Konuswinkel dem Winkel der kegelförmigen Ausnehmung entspricht und die durch Keilanzug den Schneidkörper (10) gegen die Anschlagfläche (15), die Anlagefläche (17) und die Abstützfläche (16) der Ausnehmung (13) drückt.

2. Maschinenreibahle nach Anspruch 1, dadurch gekennzeichnet, daß die kerbenartigen Ausnehmungen (8) auf den aneinanderliegenden Innenseiten (23) der Schneidkörperhalter (30) im gleichen Abstand von den Abstützflächen (16) der L-förmigen Ausnehmungen (13) der zugehörigen Schneidkörperhalter (30) angeordnet sind.

3. Maschinenreibahle nach Anspruch 1 oder 2, dadurch gekennzeichnet, daß der vorspringende Abstützbereich (11) als quer zur Abstützfläche (16) der L-förmigen Ausnehmung (13) verlaufender Wulst ausgebildet ist.

4. Maschinenreibahle nach einem der Ansprüche 1 bis 3, dadurch gekennzeichnet, daß der vorspringende Abstützbereich (19) im möglichst großen Abstand von der Anschlagfläche (15) der L-förmigen Ausnehmung (13) sich auf der Abstützfläche (16) der L-förmigen Ausnehmung (13) abstützt.

5. Maschinenreibahle nach einem der Ansprüche 1 bis 4, dadurch gekennzeichnet, daß die Länge des Schneidschenkels (11) und der Schneidkante (5) axial über die S chneidkörperhalter (30) vorstehen.

6. Maschinenreibahle nach Anspruch 2, dadurch gekennzeichnet, daß die Flanken (31,32) der kerbenartigen Ausnehmung (8) gleich groß sind und normal zu ihrer gemeinsamen Grundlinie (33) einen Winkel von 120° bis 140°, vorzugsweise 128° einschließen.

7. Maschinenreibahle nach Anspruch 6, dadurch gekennzeichnet, daß die Grundlinie (33) der Flanken (31,32) in einem Winkel von 35 bis 38° zur Innenseite (23) des Schneidkörperhalters (30) verläuft und der Konuswinkel des Zentrierstiftes (9) etwa 90° beträgt.

8. Maschinenreibahle, insbesondere nach einem der Ansprüche 1 bis 7, mit einem Einspannschaft, dadurch gekennzeichnet, daß der Werkzeughalter (1) über eine selbsthemmende Konusverbindung (41) mit dem Einspannschaft (40) verbunden ist.

9. Maschinenreibahle nach Anspruch 8, dadurch gekennzeichnet, daß der Werkzeughalter (1) mit einem Innenkonus versehen ist, in den der Außenkonus des Einspannschaftes (40) einsteckbar ist.

## FIG. 1

## FIG. 2

0012211

FIG. 3

FIG. 4

1

2

9

3

8

30

4

23

30

5

10

1

9

2

FIG. 5

FIG. 6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US − A − 2 435 065 (E.A. ZEMPEL)<br>* Ansprüche 1 und 5; Spalte 1, Zeilen 4 bis 9 und 26 bis 31; Spalte 2, Zeilen 13 bis 36; Spalte 3, Zeilen 17 bis 45 *<br>−− | 1,2,6 |
| | DE − U − 1 965 033 (M. KOYEMANN NACHF. PUCHSTEIN & CO)<br>* Seite 4; Fig. 1 *<br>−− | 1 |
| D | DE − C3 − 2 437 288 (M. KOYEMANN NACHF. PUCHSTEIN & CO)<br>* Ansprüche 1, 2; Fig. 3 bis 5 *<br>−− | 1 |
| A | US − A − 2 371 127 (F.V. CALHOUN)<br>* Fig. 1 bis 3 *<br>−− | 1 |
| A | US − A − 2 380 517 (J. GORDON)<br>* Seite 1, rechte Spalte, Zeilen 30 bis 32; Fig. 1 *<br>−− | 1 |
| A | US − A − 3 363 485 (W.S. HOLLOWAY)<br>* Fig. 1 bis 3 *<br>−− | 2,6 |
| A | CH − A − 245 445 (BERAL AG)<br>* Seite 1; Zeilen 38 bis 43 *<br>−− | 5 |

./..

**KLASSIFIKATION DER ANMELDUNG (Int.Cl.³)**

B 23 D   77/04

**RECHERCHIERTE SACHGEBIETE (Int. Cl.³)**

B 23 B   29/03
B 23 D   77/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 14-03-1980 | MARTIN |

EPA form 1503.1   06.78

Europäisches
Patentamt

| | **EINSCHLÄGIGE DOKUMENTE** | | **KLASSIFIKATION DER ANMELDUNG (Int.Cl.)** |
|---|---|---|---|
| Kategorie | Kennzeichnung des Dokuments mit Angabe, soweit erforderlich, der maßgeblichen Teile | betrifft Anspruch | |
| A | DE - C - 922 454 (M. KOYEMANN NACHF. PUCHSTEIN & CO) <br> * Anspruch 2 * <br> -- | 6 | |
| A | CH - A- 349 860 (R. SCHWEIZER & CIE) <br> * Seite 1, Zeilen 35, 36 * <br> -- | 8 | **RECHERCHIERTE SACHGEBIETE (Int. Cl.)** |
| A | DE - A - 2 315 660 (JU-GERÄTE-FABRIK W. JUNGINGER KG) <br> * Seite 4, letzter Absatz bis Seite 5, Zeile 3 * <br> ---- | 8 | |